Europäisches Patentamt

European Patent Office

Office européen des brevets

(11) Veröffentlichungsnummer: **0 237 897**
A2

# EUROPÄISCHE PATENTANMELDUNG

(21) Anmeldenummer: 87103298.3

(22) Anmeldetag: 07.03.87

(51) Int. Cl.³: **B 23 K 9/20**

(30) Priorität: 08.03.86 DE 3607769

(43) Veröffentlichungstag der Anmeldung:
23.09.87 Patentblatt 87/39

(84) Benannte Vertragsstaaten:
AT BE CH DE FR GB IT LI NL SE

(71) Anmelder: Bolzenschweisstechnik Heinz Soyer GmbH
Inningerstrasse 14
D-8031 Wörthsee-Etterschlag(DE)

(72) Erfinder: Schmidbauer, Helmut
Friedrich-Schüle-Strasse 9
D-8016 Feldkirchen(DE)

(74) Vertreter: von Kirschbaum, Albrecht, Dipl.-Ing.
Hermann-Ehlers-Strasse 21a
D-8034 Germering(DE)

(54) Bolzenschweisspistole.

(57) In einer Bolzenschweißpistole zum Aufschweißen von Bolzen oder stiftförmigen Teilen ist der Schweißkolben aus zwei starrr miteinander verbundenen Teilen, nämlich aus einem im wesentlichen kreiszylindrischen vorderen Kolbenteil und aus einem im Querschnitt etwa rechteckigen, langgestreckten hinteren Kolbenteil gebildet. Darüber hinaus sind auf der dem Auslöser abgewandten Oberseite des hinteren Kolbenteils Abstufungen ausgebildet, mit denen ein im Pistolengehäuse schwenkbar gehaltertes Betätigungsteil zusammenwirkt, an welchem der Auslöser angreift. Ferner ist der hintere, im Querschnitt etwa rechteckige Kolbenteil in diametral vorgesehenen Längsschlitzen einer den vorderen Kolbenteil umschließenden Hülse verdrehungssicher geführt. Die Hülse ihrerseits ist an ihrem dem Bolzenhalter zugewandten Ende durch ins Pistolengehäuse vorstehende Stifte verdrehungssicher gehaltert, wobei diese Stifte in an diesem Ende vorgesehene diametral gegenüberliegende Schlitze eingreifen.

Fig.1

EP 0 237 897 A2

DIPL.-ING. A.v. KIRSCHBAUM
PATENTANWALT

1.

Anwaltsakte: So-1560

## Bolzenschweißpistole

Die Erfindung betrifft eine Bolzenschweißpistole zum Aufschweißen von Bolzen oder stiftförmigen Teilen nach dem Oberbegriff des Anspruchs 1.

In der DE 25 16 407 ist eine Bolzenschweißpistole beschrieben und dargestellt, bei welcher der Schweißkolben aus Messing in Form eines einzigen Drehteils ausgebildet ist, das zur Aufnahme eines Bolzenhalters ausgebohrt und geschlitzt ist und zur Aufnahme einer Spannmutter mit Außengewinde versehen ist. Der hintere Teil dieses Schweißkolbens ist so bearbeitet, daß er im Querschnitt etwa rechteckig ausgeführt ist und auf seiner Oberseite eine etwa rechteckige Ausnehmung aufweist, während an dem Ende des Schweißkolbens, an welchem eine einstellbare, druckausübende Feder anliegt, ringförmige Verdickungen mit Anfasungen vorgesehen sind.

Ferner weist der Kolben in seinem vorderen, der Spannmutter benachbarten Teil eine Ausfräsung auf, in welcher ein genau passender Führungskeil untergebracht ist. Zur verdrehungssicheren Halterung des Schweißkolbens in einer Hülse ist dieser Keil in einer Nut auf der Innenseite der zylindrischen Hülse geführt; diese Nut wird entweder durch Stoßen, was besonders zeit- und arbeitsaufwendig ist, oder aber durch Ausräumen, was etwas weniger aufwendig als das Stoßen ist, in der Hülseninnenseite ausgebildet. Ferner sind in der Hülse noch Bohrungen vorgesehen, in welche zur verdrehungssicheren Halterung der Hülse im Pistolengehäuse in dessen Inneres vorstehende Stifte eingreifen.

Ferner ist in der bekannten Bolzenschweißpistole noch ein
Auslösegriff vorgesehen, in welchem eine kleine Druckfeder
untergebracht ist, welche dafür sorgt, daß ein Betätigungsteil, das an seiner dem Schweißkolben zugewandten Seite eine
trapezförmige Ausnehmung aufweist, im ungespannten Zustand
vor den Verdickungen und Anfasungen sicher an dem Schweißkolben anliegt.

Die verschiedenen Teile der aus der DE 25 16 407 bekannten
Schweißpistole sind nicht nur großteils massiv und daher
ziemlich schwer, weshalb die Pistole insgesamt ein verhältnismäßig hohes Eigengewicht aufweist und somit über längere
Zeit beschwerlich zu handhaben ist, sondern die einzelnen
Teile, insbesondere der aus einem Stück bestehende Schweißkolben sowie die zu dessen Drehsicherung erforderliche Hülse
sind verhältnismäßig komplizierte, und daher nur mit großem
Arbeisaufwand zu erstellende Teile, so daß die bekannte
Bolzenschweißpistole insgesamt im Hinblick auf Fertigung und
Montage kompliziert und zeitaufwendig ist.

Gemäß der Erfindung soll daher eine im Aufbau einfache Bolzenschweißpistole geschaffen werden, die hinsichtlich ihres
Gesamtgewichts leichter ist und dadurch insgesamt bequemer
und weniger ermüdend zu handhaben ist, als bisher verwendete
Bolzenschweißpistolen. Dies ist bei einer Bolzenschweißpistole nach dem Oberbegriff des Anspruchs 1 durch die Merkmale im kennzeichnenden Teil des Anspruchs 1 erreicht. Vorteilhafte Weiterbildungen sind Gegenstand der Unteransprüche.

Gemäß einer bevorzugten Ausführungsform der Erfindung ist
der Schweißkolben aus zwei starr miteinander verbundenen
Teilen, nämlich aus einem im wesentlichen kreiszylindrischen, vorderen Teil, an dessen freien Ende der Bolzenhalter
vorgesehen ist, und aus einem im Querschnitt etwa rechteckigen, langstreckten hinteren Teil gebildet, an dessen freien Ende über ein Kunststoff-Zwischenteil eine Druckfeder angreift. Ferner sind bei dieser vorteilhaften Ausbildung gemäß der Erfindung auf der Oberseite des hinteren Kolbenteils Abstufungen ausgebildet, mit welchen ein im Pistolengehäuse schwenkbar gehalterte Betätigungsteil zusammenwirkt, an welchem der Auslöser angreift. Im Unterschied zu herkömmlichen Schweißkolben, welche, wie beispielsweise in der DE 25 16 407 beschrieben und dargestellt, ein aus einem Stück bestehendes Dreh- und Frästeil sind, besteht der Schweißkolben bei der erfindungsgemäßen Bolzenschweißpistole aus zwei unabhängig voneinander hergestellten Teilen, die so gefertigt sind, daß bei der Montage der hintere, im Querschnitt etwa rechteckige Kolbenteil in eine entsprechende Ausnehmung in dem vorderen Kolbenteil hineingepreßt wird und fest in diesem sitzt; anschließend werden dann die beiden Kolbenteile, um sowohl eine feste starre Verbindung zu erhalten als auch um eine gute Stromführung sicherzustellen, fest miteinander verbunden, vorzugsweise vernietet.

Gemäß einer weiteren bevorzugten Ausführungsform der Erfindung sind bei der zur drehungssicheren Halterung des Kolbens erforderlichen Hülse in dieser an beiden Enden jeweils zwei unterschiedlich lange, aber mittels beispielsweise eines Sägeblatts ohne großen Aufwand herstellbare, einander diametral gegenüberliegende Schlitze vorgesehen; vorzugsweise sind die an den beiden Enden vorgesehenen, unterschiedlich bemessenen Schlitzpaare gegeneinander um 90° verdreht. Hierbei ist in dem einen Schlitzpaar der im Querschnitt rechteckige, hintere Kolbenteil geführt, während in die am gegenüberliegenden Hülsenende vorgesehenen kürzeren Schlitze im montierten Zustand der Bolzenschweißpistole in deren Inneres vorstehende Stifte eingreifen. Durch die an beiden Enden geschlitzte, zylinderförmige Hülse ist somit eine verdrehungssichere Halterung einerseits des aus zwei Stücken bestehenden Schweißkolbens in der Hülse und andererseits der Hülse im Pistolengehäuse in einfacher und zuver-

4.

lässiger Weise gewährleistet.

Ferner sind im Unterschied zu dem aus der DE 25 16 407 bekannten Schweißkolben, welcher an seinem der einstellbaren Druckfeder zugewandten Ende Verdickungen sowie zu seiner Verschiebung zusätzlich Anfasungen aufweist, ist an dem entsprechenden Ende des hinteren, im Querschnitt rechteckigen Kolbenteils lediglich ein vorzugsweise aus Nylon (eingetragenes Warenzeichen) hergestelltes, eine Stufe aufweisendes Zwischenteil vorgesehen, an welchem die einstellbare Druckfeder angreift.

Somit sind bei der erfindungsgemäßen Bolzenschweißpistole die zu deren Funktion sowie zu einer einwandfreien Arbeitsweise erforderlichen Teile sehr viel einfacher und weniger kompliziert ausgeführt als die entsprechenden Teile der bisher benützten Bolzenschweißpistolen. Da die Teile obendrein weniger massiv sowie aus leichteren Materialien hergestellt sind, hat eine gemäß der Erfindung ausgeführte Bolzenschweißpistole insgesamt ein geringeres Gewicht und ist somit leichter zu handhaben, wodurch auch nach einer längeren Benutzungsdauer keine nennenswerten frühzeitigen Ermüdungen zu befürchten sind.

Nachfolgend wird die Erfindung anhand einer bevorzugten Ausführungsform unter Bezugnahme auf die anliegenden Zeichnungen im einzelnen erläutert. Es zeigen:

Fig.1        teilweise schematisch und im Schnitt die wesentlichen Teile einer Bolzenschweißpistole gemäß der Erfindung, und

Fig.2        in einer Draufsicht lediglich eine Schweißkolbeneinheit und einige der zu ihrer Betätigung erforderlichen Teile.

5.

In den beiden Figuren sind lediglich die in Verbindung mit der Erfindung wesentlichen Teile einer Bolzenschweißpistole, teilweise schematisch dargestellt bzw. nur angedeutet. Auf der linken Seite sind in den beiden Figuren eine Spannmutter 23 und ein von dieser gehalterter, schematisch dargestellter Bolzenhalter 7 dargestellt. Ferner ist am vorderen linken Ende der Pistole 1 ein Abdeckring 24 aus Kunststoff vorgesehen, durch welchen ein Eindringen von Schmutz- und Staubpartikeln verhindert ist. Die Spannmutter 23 ist, was in den Figuren nicht näher dargestellt ist, auf das aus der Pistole 1 vorstehende Ende eines Schweißkolbens geschraubt, der gemäß der Erfindung aus einem vorderen, kreiszylindrischen Kolbenteil 20 und aus einem hinteren, im Querschnitt im wesentlichen rechteckigen Kolbenteil 21 besteht.

Hierbei sitzt der hintere Kolbenteil 21 mit seinem in den Figuren links dargestellten Ende fest in einem geschlitzten, abgeflachten Teil 20' des vorderen Kolbenteils 20; die beiden Kolbenteile 20 und 21 sind in dieser Lage dadurch fest und sicher miteinander verbunden, daß sie vorzugsweise an zwei, in den Figuren mit Bezugszeichen 25 gekennzeichneten Stellen starr miteinander verbunden, vorzugsweise vernietet sind.

Der vordere kreiszylindrische Kolbenteil 20 besteht vorzugsweise aus Messing, und der hintere, im Querschnitt im wesentlichen rechteckige Kolbenteil 21 besteht vorzugsweise aus Eisen oder Stahl. Die starre Verbindung der beiden Kolbenteile 20 und 21 ist nicht nur wichtig, um eine einwandfreie Ausrichtung der beiden Kolbenteile zu gewährleisten, sondern auch wichtig, um zwischen diesen beiden Kolbenteilen durch eine gute elektrische Verbindung einen einwandfreien Stromübergang zu schaffen.

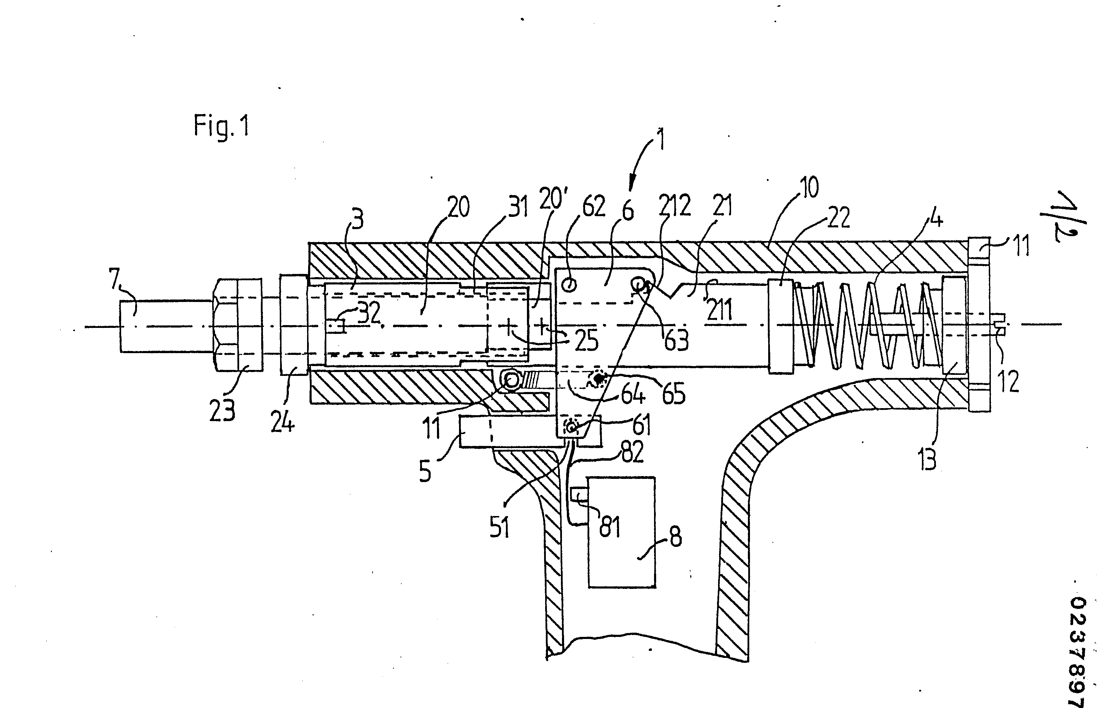

Auf der Oberseite 211 des hinteren Kolbenteils 21 sind Abstufungen 212 vorgesehen, deren Ausbildung schematisch in der Seitenansicht der Fig.1 wiedergegeben ist.

Der vordere Kolbenteil 20 ist von einer zylinderförmigen Hülse 3 umgeben, welche an ihrem dem Bolzenhalter zugewandten Ende zwei diametral gegenüberliegende Schlitze 32 und an ihrem dem hinteren Kolbenteil 21 zugewandten Ende zwei weitere, ebenfalls diametral gegenüberliegende, Schlitze aufweist; vorzugsweise sind die an den beiden Enden der Hülse 3 ausgebildeten Schlitzpaare 31 bzw. 32 um 90° gegeneinander verdreht.

In die vorderen, auf der Seite des Bolzenhalters ausgebildeten Schlitze 32 greifen zwei in den Figuren nicht näher dargestellte, ins Innere des Pistolengehäuses 10 vorstehende Stifte dann ein, wenn die beiden Hälften eines Pistolengehäuses 10 miteinander verschraubt sind. In dem hinteren Schlitzpaar 31 der Hülse 3 ist der mit dem vorderen Kolbenteil 20 starr verbundene hintere Kolbenteil 21 verdrehungssicher geführt.

Am in den Figuren rechten Ende des hinteren Kolbenteils 21 ist ein abgesetzter aus einem zähen Kunststoff, wie beispielsweise Nylon (eingetragenes Warenzeichen) hergestellter Ring aufgebracht. Gegen diesen Ring drückt eine Feder 4, deren anderes Ende an einem ebenfalls abgesetzten Kunststoffring 13 anliegt, in dessen Innengewinde von außen eine mit Außengewinde versehene Stellschraube eingeschraubt ist, mittels welcher die Druckkraft der Feder 4 von außen einstellbar ist. Das rechte Ende des Pistolengehäuses 10 ist durch eine vorzugsweise aufgeschraubte Abdeckung 11 verschlossen.

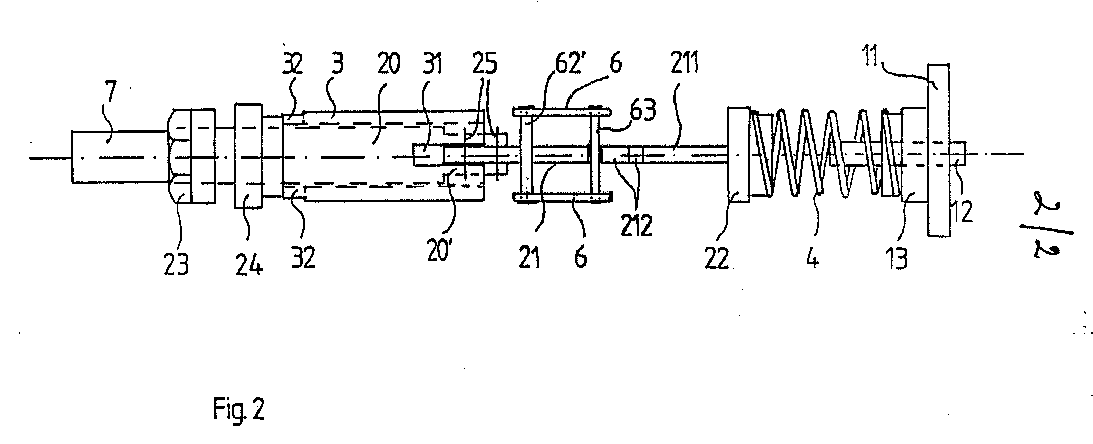

Den vorderen bis mittleren Bereich des hinteren Kolbenteils 20 umgreift ein Betätigungsteil 6, das im wesentlichen aus zwei in Draufsicht etwa rechteckigen Platten besteht, welche durch eine Abstandshülse 62' sowie zwei nur angedeutete Stifte 61 und 65 in dem aus Fig.2 ersichtlichen Abstand miteinander verbunden sind. Ferner ist zwischen den beiden Platten des Betätigungsteils 6 noch lose ein Betätigungsstift 63 gehaltert. In der Abstandshülse 62' ist ein ins Pistoleninnere vorstehender, schematisch angedeuteter Stift 62 vorgesehen, um welchen das Betätigungsteil 6 schwenkbar ist. An dem Abstandsstift 65 greift das eine Ende einer Zugfeder 64 an, deren anderes Ende an einem ins Innere des Pistolengehäuses 10 vorstehenden Stift 11 angebracht ist. Der zweite, am unteren Ende des Betätigungsteils 6 vorgesehene Abstandsstift 61 liegt in einer Ausnehmung 51 eines aus dem Pistolengehäuse in den Figuren nach links vorstehenden Auslösers 5. Ferner steht in die Ausnehmung 51 des Auslösers 5 noch eine Blattfeder 82 vor, über welche bei Verschieben des Auslösers 5 ins Innere der Pistole über einen Auslösestift 81 ein Schalter 8 geschaltet wird.

In den beiden Figuren befindet sich die Bolzenschweißpistole in dem gespannten, betriebsbereiten Zustand. In diesen Zustand wird die Bolzenschweißpistole 1 dadurch gebracht, daß nach dem Einsetzen eines nicht näher dargestellten Bolzens in den Bolzenhalter 7 dieser und der in ihn eingesetzte Bolzen entgegen der Kraft der Druckfeder 4 in die Bolzenschweißpistole 1 gedrückt werden. Durch das Hineindrücken des Bolzenhalters und damit des aus den zwei Teilen 20 und 21 gebildeten Schweißkolbens gleitet der im Betätigungsteil 6 gehalterte Stift 63 entlang der nach links oben verlaufenden Schräge der Abstufungen 212 und fällt an deren in Fig.1 linken senkrechten Flanke auf den tiefer liegenden Absatz. Der Stif 63 nimmt dann im gespannten Zustand der Bolzenschweißpistole 1 die in Fig.1 und 2 dargestellte Lage ein, in welcher er (63) durch die Wirkung der Druckfeder 4 an der senkrechten Flanke der Abstufungen 212 anliegt.

Wenn nun die gespannte und damit betriebsbereite Bolzenschweißpistole 1 mittels der in den beiden Figuren nicht dargestellten, am vorderen linken Ende des Pistolengehäuses 10 angebrachten Stützfüße auf der Stelle aufgesetzt ist, an welcher der im Bolzenhalter gehalterte Bolzen aufgesetzt werden soll, kann der Schweißvorgang ausgelöst werden, indem der Auslöser 2 in das Pistolengehäuse 10 gedrückt wird, d.h. in Fig.1 nach rechts verschoben wird. Dadurch wird das Betätigungsteil 6 um den Stift 62 verschwenkt und dadurch gleichzeitig der in ihm (6) lose gehaltene Stift 63 angehoben. Sobald der Stift 63 die obere Kante der senkrechten Flanke der Abstufungen 212 erreicht, wird der aus dem beiden Teilen 20 und 21 bestehende Schweißkolben durch die Feder 4 in Fig.1 nach links gedrückt. Hierdurch schießt dann der in den Bolzenhalter 7 eingesetzte Schweißbolzen auf das ebenfalls nicht dargestellte Grundmetall zu, auf welchem er dann mittels Lichtbogenschweißung aufgeschweißt wird.

Durch das Betätigen des Auslösers 5 ist nicht nur das Betätigungsteil 6 verschwenkt worden, sondern gleichzeitig auch über die Blattfeder 82 und den Auslösestift 81 der schematisch dargestellte Schalter 80 geschlossen und die für die Lichtbogenschweißung erforderliche Energie freigegeben worden.

Ende der Beschreibung

Anwaltsakte: So-1560


Bolzenschweißtechnik

Heinz Soyer GmbH

8031 Wörthsee-Etterschlag


P a t e n t a n s p r ü c h e

1. Bolzenschweißpistole zum Aufschweißen von Bolzen oder stiftförmigen Teilen, mit einem Schweißkolben, der in einer im Pistolengehäuse verdrehungssicher gehalterten Hülse seinerseits verdrehungssicher geführt ist, und an dessen einen Ende ein Bolzenhalter gehaltert ist, während gegen dessen anderes Ende eine in ihrer Federkraft einstellbare Feder drückt, und mit einem Auslöser, der mit einem vorgespannten Betätigungsteil in Wirkverbindung steht, dadurch g e - k e n n z e i c h n e t, daß der Schweißkolben aus zwei starr miteinander verbundenen Teilen, nämlich aus einem im wesentlichen kreiszylindrischen, vorderen Teil (20), an dessen freien Ende der Bolzenhalter (7) vorgesehen ist, und aus einem im Querschnitt etwa rechteckigen, langgestreckten hinteren Teil (21) gebildet ist, an dessen freien Ende über ein Kunststoff-Zwischenteil (22) eine Druckfeder (4) angreift, und daß auf der dem Auslöser (5) abgewandten Oberseite (211) des hinteren Kolbenteils (21) Abstufungen (212) ausgebildet sind, mit denen das im Pistolengehäuse (10) schwenkbar gehalterte Betätigungsteil (6) zusammenwirkt, an dessen gegenüberliegenden Ende der Auslöser (5) angreift.


2. Bolzenschweißpistole nach Anspruch 1, dadurch g e - k e n n z e i c h n e t, daß der hintere Kolbenteil (21) fest in dem vorderen Kolbenteil (20) sitzt und mit diesem (20) vernietet ist.

- 2 -

3. Bolzenschweißpistole nach einem der Ansprüche 1 oder 2, dadurch g e k e n n z e i c h n e t, daß der vordere Kolbenteil (20) vorzugsweise aus Messing und der hintere Kolbenteil (21) vorzugsweise aus Eisen oder Stahl hergestellt ist.

4. Bolzenschweißpistole nach einem der vorhergehenden Ansprüche, dadurch g e k e n n z e i c h n e t, daß der Kolben mittels seines hinteren, im Querschnitt etwa rechteckigen Teils (21) in diametral vorgesehenen Längsschlitzen (31) der den vorderen Kolbenteil (20) umschließenden Hülse (3) verdrehungssicher geführt ist, und daß die Hülse (3) an ihrem dem Bolzenhalter (7) zugewandten Ende weitere, diametral vorgesehene Schlitze (32) aufweist, in welchen zur verdrehungssicheren Hülsenhalterung ins Pistolengehäuse (10) vorstehende Stifte eingreifen.

Fig. 1

1/2

0237897

Fig. 2